# EUROPÄISCHE PATENTSCHRIFT

(11) **EP 3 107 720 B1**
(45) Veröffentlichungstag und Bekanntmachung des Hinweises auf die Patenterteilung: **18.11.2020**
(21) Anmeldenummer: 15700359.1
(22) Anmeldetag: 09.01.2015
(51) Int. Cl.: B32B 5/20, B32B 37/15, C08J 9/32, B41N 10/04

(54) **VERFAHREN ZUR BESCHICHTUNG EINES SUBSTRATES**
PROCESS FOR COATING A SUBSTRATE
PROCÉDÉ DE REVÊTEMENT D'UN SUBSTRAT

(30) Priorität: 18.02.2014 DE 102014202965
(43) Veröffentlichungstag der Anmeldung: 28.12.2016
(73) Patentinhaber: ContiTech Elastomer-Beschichtungen GmbH, 30165 Hannover (DE)
(72) Erfinder: MOLDENHAUER, Thomas, 99867 Gotha (DE); LUTHER, Sabine, 30519 Hannover (DE); PERKOVIC, Thomas, 37120 Bovenden (DE); EYMER, Heiko, 37154 Northeim (DE)
(74) Vertreter: Preusser, Andrea
(86) Internationale Anmeldenummer: PCT/EP2015/050288
(87) Internationale Veröffentlichungsnummer: WO 2015/124327

(56) Entgegenhaltungen:
- DE-A1- 2 000 737
- DE-A1-102010 036 717
- US-A- 4 897 230
- US-A1- 2012 318 449
- DATABASE WPI Week 200871 Thomson Scientific, London, GB; AN 2008-M02972 -& CN 101 096 421 A (HUAXIA HAIWAN PLASTIC CO LTD) 2 January 2008 (2008-01-02)
- DATABASE WPI Week 199936 Thomson Scientific, London, GB; AN 1999-423967 -& JP H11 170724 A (SUMITOMO RUBBER IND LTD) 29 June 1999 (1999-06-29)

## Beschreibung

Die Erfindung betrifft ein Verfahren zur Beschichtung eines Substrates.

Im Bereich Drucktücher ist die kompressible Schicht des Drucktuches meist als mikroporöse Schicht ausgebildet.

Die Herstellung eines Drucktuches mit einer kompressiblen Schicht wird beispielsweise in DE 10 2010 036 717 A1 beschrieben. Hierbei wird die kompressible Schicht mittels beheizter Walzen mikroporös ausgebildet. Zudem wird ein ähnliches Verfahren in JP H11 170724 A beschrieben. Zur Ausbildung der mikroporösen Schicht werden häufig Mikrokugeln verwendet.

So werden zum Beispiel in DE-OS 2 117 892 Mikrokugeln für den Einsatz in der kompressiblen Schicht von Gummidrucktüchern vorgeschlagen. Hohle, thermoplastische Kunststoff-Mikrokugeln können dabei sowohl in vorexpandierter Form als auch in expandierbarer Form eingesetzt werden. Ein in DE-OS 2 117 892 vorgeschlagenes und häufig genutztes Verfahren zur Einbringung der Mikrokugeln in das Kautschukpolymer besteht in einem Verteilen der Mikrokugeln in einer Kautschukmischungslösung aus Kautschukmischung und organischem Lösemittel. Diese Lösung wird dann zu einer Schicht gewünschter Dicke vergossen oder verteilt (Rakelverfahren), getrocknet und vulkanisiert. Die Lösung kann dabei direkt auf andere Schichten des Drucktuches aufgegossen oder darauf verteilt werden, beispielsweise auf einer Verstärkungsschicht aus einem Gewebe. Das Verfahren ist lösemittelbehaftet und daher ökologisch bedenklich. Ferner ist es energie- und kostenintensiv, da zunächst eine Kautschukmischungslösung hergestellt werden muss und nach dem Verteilen das Lösemittel vor der Vulkanisation wieder ausgetrieben werden muss. Hierzu werden in der Regel vorexpandierte Mikrokugeln verwendet.

In EP 2 275 475 B1 wird ein Verfahren zur Herstellung einer Kautschukmischung für Drucktücher beschrieben, bei dem die Mikrokugeln in vorexpandierter Form zunächst mit einem Weichmacheröl vermischt werden und dann erst der Kautschukmischung zugeführt werden. Dadurch wird die Zerstörung der Mikrokugeln durch die Scherkräfte im Mischprozess verringert.

Ebenso ist es möglich, nicht-expandierte Mikrokugeln einzusetzen. Hier muss die Schicht, welche die Mikrokugeln enthält bzw. das gesamte Endprodukt in einem Schichtenverbund anschließend einem Blähverfahren unterworfen werden, damit die Mikrokugeln expandieren können und sich so die gewünschte poröse Struktur bilden kann. Das Blähverfahren findet meist in einem geschlossenen Kessel statt, was maschinentechnisch aufwendig, energieintensiv und zudem auch noch kostenintensiv ist.

Der Erfindung liegt daher die Aufgabe zu Grunde, ein Verfahren zur Beschichtung eines Substrates mit einer mikroporösen Schicht bereitzustellen, wobei das beschichtete Substrat zur Herstellung eines Drucktuches geeignet ist, welches einfach und vergleichsweise günstig und in ökologisch unbedenklicher Weise durchzuführen ist. Gleichzeitig soll sich die Dicke des Substrates incl. der Beschichtung gut, d.h. ohne größere Schwankungen, einstellen lassen.

Gelöst wird diese Aufgabe erfindungsgemäß dadurch, dass das Verfahren wenigstens folgende Verfahrensschritte enthält:
- Einmischen von wenigstens einem physikalischen und / oder chemischen Blähmittel in eine Elastomermischung in einem ersten Verfahrensschritt und
- Ausformen der Elastomermischung enthaltend das physikalische und / oder chemische Blähmittel mittels eines Kalanders in wenigstens einem weiteren Verfahrensschritt und
- Applizierung der kalandrierten Elastomermischung enthaltend das physikalische und / oder chemische Blähmittel auf ein zu beschichtendes Substrat in wenigstens einem weiteren Verfahrensschritt und
- Erwärmung und Aufblähung der Beschichtung enthaltend das physikalische und / oder chemische Blähmittel mittels wenigstens einer

Wärmequelle in einem weiteren Verfahrensschritt, wobei die Wärmequelle ein Infrarotstrahler ist, und wobei der Infrarotstrahler ein Keramikstrahler ist. Überraschenderweise hat sich gezeigt, dass sich durch die Kombination von Kalandrieren und Erwärmen mittels wenigstens einer Wärmequelle das Blähverhalten des eingesetzten Blähmittels gut einstellen lässt. Diese Einstellung erfolgt über die Temperatur der Wärmequelle und über die Kalandereinstellungen.

Die aufgeblähte Elastomerschicht muss im Weitergang, bspw. zur Verwendung in einem Drucktuch, in der Regel mit weiteren Substraten kombiniert werden. Dies ist nunmehr ohne weitere Zwischenheizung möglich, da die Dicke der aufgeblähten Elastomerschicht gut eingestellt werden kann. Hieraus ergibt sich, dass die noch unvulkanisierte Oberfläche nicht mehr separat mit einer Haftschicht versehen werden muss, sondern direkt dubliert werden kann. Dies ergibt neben der Einsparung an Haftschichten noch einen zusätzlichen logistischen Vorteil. Im Vergleich zum bisher bekannten Aufstreichen der Blähmittel, insbesondere der Mikrokugeln, enthaltenden Elastomerschicht, bei dem meist ein Lösungskneter, Streichmaschinen und Kessel benötigt werden, ist erfindungsgemäß lediglich ein Kalander erforderlich. Dies spart mehrere technisch aufwendig zu bedienende Vorrichtungen ein.

Das Erwärmen und Aufblähen der Beschichtung erfolgt bevorzugt in direktem Anschluss an das Applizieren, etwa während eines Plattierungsvorgangs. Plattieren bedeutet das Ausformen der Elastomermischung mittels Kalander und das direkt anschließende Aufbringen dieser Schicht auf ein mitlaufendes Substrat, wobei es sich bei dem mitlaufenden Substrat bevorzugt um eine Gewebebahn, eine Folie, ein Blech oder eine sonstige Bahnware handelt.

Als Blähmittel werden üblicherweise porenbildende Treibgase wie z. B. Azo- und DiazoVerbindungen, bezeichnet, die unter dem Einfluß von Wärme oder Katalysatoren Gase (z. B. N2 oder CO2) abspalten und daher zur Herstellung geschäumter Polymermischungen dienen. Derartige chemische Blähmittel zersetzen sich hierbei bei einer bestimmten Temperatur während der Verarbeitung unter Gas-Bildung oder bei Zusatz von flüchtigen Lösemitteln während der Polymerisation bzw. Vulkanisation.

Als physikalische Blähmittel werden häufig Mikrokugeln verwendet. Diese können in expandierter oder in nicht-expandierter Form eingesetzt werden. Bevorzugt handelt es sich um nicht-expandierte Mikrokugeln, welche vorzugsweise als hohle Mikrokugeln vorliegen, insbesondere aus Glas, Phenolharz oder Kohlenstoff. Bevorzugt werden jedoch Mikrokugeln aus thermoplastischem Kunststoffmaterial eingesetzt. Diese weisen eine gewisse Elastizität auf und halten den Scherkräften im Mischverfahren und während des Kalandrierens besser stand.

Bei dem thermoplastischen Kunststoffmaterial handelt es sich bevorzugt um wenigstens ein Acrylnitrilpolymer. Derartige Mikrohohlkugelns sind unter anderem unter dem Handelsnamen Expancel® von der Firma Akzo Nobel erhältlich.

Die Menge der Mikrokugeln in der Elastomerschicht beträgt bevorzugt zwischen 0,5 und 10 m%, besonders bevorzugt zwischen 1 und 5 m%.

Als Wärmequelle könnten grundsätzlich alle bekannten Wärmequellen, wie bspw. ein Heißluftofen, verwendet werden. Erfindungsgemäß handelt es sich aber bei der Wärmequelle um einen Infrarotstrahler (IR-Strahler), und konkret um einen Keramikstrahler.

Bei einem Keramikstrahler werden die Keramikkörper indirekt von metallischen Heizwendeln aufgeheizt. Die Keramikkörper sind bevorzugt quadratisch oder rechteckig ausgebildet. Diese lassen sich sehr gut zu den gewünschten Flächen aneinandersetzen, so dass sich ein homogenes Strahlerfeld und somit ein homogenes Temperaturfeld erzielen lässt.

Grundsätzlich könnten alternativ so genannte Quarzstrahler verwendet werden, die ähnlich einer Lampe sind. Diese lassen sich allerdings nur röhrenförmig anordnen.

Die Keramikstrahler haben bevorzugt eine Oberflächentemperatur zwischen 300 und 500°C und strahlen vorzugsweise breitbandig in einem Wellenlängenbereich zwischen 2 und 10µm. Dies führt zu Oberflächentemperaturen des beschichteten Substrats zwischen 180 und 190°C. Bei dieser Temperatur wird das beschichtete Substrat durch die gesamte Schichtdicke expandiert. Die Schichtdicken der Elastomerschicht betragen bevorzugt zwischen 0,1mm und 1mm. Der Expansionswert liegt bevorzugt zwischen 50 und 150%.

Das nach dem erfindungsgemäßen Verfahren beschichtete Substrat kann bevorzugt für die Herstellung einer kompressiblen Gummischicht verwendet werden. So können beispielsweise dünne Moosgummiplatten oder kompressible Gummischichten von Drucktüchern auf einfache und ökologisch unbedenkliche Weise erzeugt werden.

Anhand einer Figur soll die Erfindung näher erläutert werden, ohne dabei auf diese beschränkt zu sein.

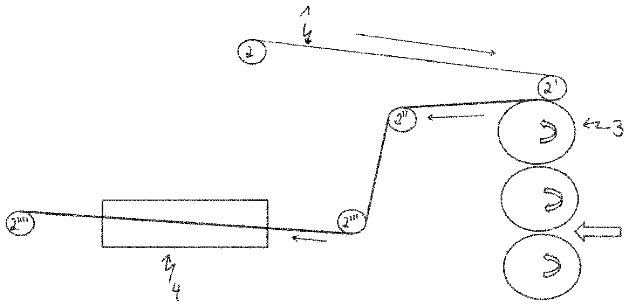

Fig. 1 zeigt das erfindungsgemäße Verfahren anhand einer schematischen Darstellung. Das zu beschichtende Substrat 1 wird mittels einer Rolle 2 abgewickelt und im Rahmen eines Plattierungsprozesses wird über einen Kalender 3 die Elastomermischung enthaltend das physikalische und / oder chemische Treibmittel aufgebracht. Nach einer weiteren Führung des nunmehr beschichteten Substrates über diverse Rollen 2", 2"'erfolgt die Expansion des Treibmittels mittels einer Wärmequelle 4, erfindungsgemäß mittels eines Infrarotstrahler, und konkret eines Keramikstrahlers.

Anschließend wird das expandierte und beschichtete Substrat mittels einer weiteren Rolle 2"" aufgewickelt und steht zur Weiterverarbeitung, insbesondere zu Herstellung eines Drucktuches bereit.

### Bezugszeichenliste (Teil der Beschreibung)

- 1: Substrat
- 2, 2', 2", 2"', 2"": Rolle
- 3: Kalander
- 4: Wärmequelle

## Patentansprüche

1. Verfahren zur Beschichtung eines Substrates (1) mit einer mikroporösen Schicht, wobei das beschichtete Substrat zur Herstellung eines Drucktuches geeignet ist, **gekennzeichnet durch** wenigstens folgende Verfahrensschritte:
- Einmischen von wenigstens einem physikalischen und / oder chemischen Blähmittel in eine Elastomermischung in einem ersten Verfahrensschritt und
- Ausformen der Elastomermischung enthaltend das physikalische und / oder chemische Blähmittel mittels eines Kalanders (3) in wenigstens einem weiteren Verfahrensschritt und
- Applizierung der kalandrierten Elastomermischung enthaltend das physikalische und / oder chemische Blähmittel auf ein zu beschichtendes Substrat (1) in wenigstens einem weiteren Verfahrensschritt und
- Erwärmung und Aufblähung der Beschichtung enthaltend das physikalische und / oder chemische Blähmittel mittels wenigstens einer Wärmequelle (4) in einem weiteren Verfahrensschritt, wobei die Wärmequelle (4) ein Infrarotstrahler ist und wobei der Infrarotstrahler ein Keramikstrahler ist.

2. Verfahren nach Anspruch 1, **dadurch gekennzeichnet, dass** das Blähmittel aus Mikrokugeln besteht.

3. Verfahren nach Anspruch 2, **dadurch gekennzeichnet, dass** die Mikrokugeln in nicht-expandierter Form vorliegen.

4. Verfahren nach einem der Ansprüche 1 bis 3, **dadurch gekennzeichnet, dass** das Erwärmen und Aufblähen der Beschichtung in direktem Anschluss an das Applizieren erfolgt.

## Claims

1. Process for the coating of a substrate (1) with a microporous layer, wherein the coated substrate is suitable for the production of a printing blanket, **characterized by** at least the following steps:
- in a first step, incorporation by mixing of at least one physical and/or chemical blowing agent into an elastomer mixture, and
- in at least one further step, shaping of the elastomer mixture comprising the physical and/or chemical blowing agent by means of a calender (3), and
- in at least one further step, application of the calendered elastomer mixture comprising the physical and/or chemical blowing agent to a substrate (1) to be coated, and
- in a further step, heating and blowing of the coating comprising the physical and/or chemical blowing agent by means of at least one heat source (4), wherein the heat source (4) is an infrared source and wherein the infrared source is a ceramic source.

2. Process according to Claim 1, **characterized in that** the blowing agent is composed of microspheres.

3. Process according to Claim 2, **characterized in that** the microspheres are present in non-expanded form.

4. Process according to any of Claims 1 to 3, **characterized in that** the heating and blowing of the coating directly follows the application procedure.

## Revendications

1. Procédé de revêtement d'un substrat (1) avec une couche microporeuse, le substrat revêtu étant approprié pour la fabrication d'un blanchet, **caractérisé par** au moins les étapes de procédé suivantes :
- l'incorporation d'au moins un agent gonflant physique et/ou chimique dans un mélange d'élastomère dans une première étape de procédé et
- le façonnage du mélange d'élastomère contenant l'agent gonflant physique et/ou chimique au moyen d'une calandre (3) dans au moins une étape de procédé supplémentaire et
- l'application du mélange d'élastomère calandré contenant l'agent gonflant physique et/ou chimique sur un substrat à revêtir (1) dans au moins une étape de procédé supplémentaire, et
- le chauffage et le gonflement du revêtement contenant l'agent gonflant physique et/ou chimique au moyen d'au moins une source de chaleur (4) dans une étape de procédé supplémentaire, la source de chaleur (4) étant un émetteur d'infrarouge et l'émetteur d'infrarouge étant un émetteur céramique.

2. Procédé selon la revendication 1, **caractérisé en ce que** l'agent gonflant est constitué par des microbilles.

3. Procédé selon la revendication 2, **caractérisé en ce que** les microbilles se présentent sous forme non expansée.

4. Procédé selon l'une quelconque des revendications 1 à 3, **caractérisé en ce que** le chauffage et le gonflement du revêtement ont lieu directement après l'application.
